# EUROPEAN PATENT APPLICATION

(11) **EP 2 330 401 A1**
(43) Date of publication of application: **08.06.2011**
(21) Application number: 09809554.0
(22) Date of filing: 26.08.2009
(51) Int. Cl.: G01N 1/36, G01N 1/28, G01N 35/02

(54) **EMBEDDING CASSETTE**

(30) Priority: 29.08.2008 JP 2008221179
(71) Applicant: Seiko Instruments Inc., Chiba-shi Chiba 261-8507 (JP)
(72) Inventor: FUJIMOTO, Koji, Chiba-shi Chiba 261-8507 (JP); KAWAJI, Toshiki, Chiba-shi Chiba 261-8507 (JP)
(74) Representative: Cloughley, Peter Andrew
(86) International application number: PCT/JP2009/004128
(87) International publication number: WO 2010/023898

(57) **Abstract**

An embedding cassette that is used as a container for performing a paraffin replacement treatment of a biological specimen and also used as a loading table of an embedding block in which the biological specimen subjected to the paraffin replacement treatment is embedded in an embedding material, the embedding cassette includes: a cassette body that is formed from a polyester resin and has an accommodation concave portion that accommodates the biological specimen and a flat printing surface; a thin-film layer that is formed on the printing surface from a resin having chemical resistance with respect to formic acid, formalin, ethanol, and xylene, that has a color different at least in lightness from a color of the cassette body; and an identification code that is displayed in the thin-film layer by cutting by irradiation with a laser beam.

## Description

### Technical Field

The present invention relates to an embedding cassette that can be used as a container for accommodating and replacement treating a specimen taken from a human or a test animal and also can be used as a fixing table for an embedding block in which the replacement-treated specimen is embedded.
Priority is claimed on Japanese Patent Application JP 2008-221179 filed in the Japanese Patent Office on August 29, 2008, the entire content of which is incorporated herein by reference.

### Background Art

A microtome is generally known as a device for preparing thin-section specimens to be used for physical and chemical tests or microscopic observations. In the thin-section specimen, a thin section with a thickness of several microns (for example, 3 µm to 5 µm) is fixed on a substrate such as a slide glass. The thin section is prepared by slicing an embedding block in which a biological specimen is embedded in an embedding material to the aforementioned extremely small thickness. The embedding block is prepared by paraffin replacing the formalin-fixed biological sample taken from a human or a test animal, and then fixing the periphery of the specimen with paraffin to obtain a block.

An embedding cassette, which is a special container, is generally used to prepare the embedding block. The embedding cassette is formed from a material having chemical resistance and configured as a box by a cassette body and a lid that can be detachably fixed to the cassette body.

A method for producing an embedding block that uses an embedding cassette will be explained below in a simple manner.
First, a biological specimen such as an organ of a test animal is fixed with formalin and then sliced to an appropriate size and accommodated in the embedding cassette. In other words, after the biological sample has been accommodated inside the cassette body, the lid is attached to the cassette body and the biological specimen is closed inside the cassette. Then, the embedding cassette is immersed in a palette filled with an alcohol. As a result, the biological specimen accommodated inside the embedding cassette is immersed in the alcohol, and water and lipids contained in the biological specimen are replaced with the alcohol, that is, dehydration and delipidation are performed. Then, the alcohol contained in the palette is substituted with xylene, and the alcohol that has been used for replacement is replaced with xylene. The xylene contained in the palette is then substituted with liquid paraffin, and the xylene that has been used for replacement is replaced with paraffin. Thus, it is possible to prepare a biological specimen in which water and lipids are replaced with paraffin.

The paraffin-replaced biological specimen is then taken out of the embedding cassette and transferred into another container filled with liquid paraffin. The emptied cassette body serves as a lid for this container. In this state, the paraffin contained in the container is cooled and solidified. As a result, an embedding block is prepared in which the biological specimen is embedded in paraffin. In this case, the embedding block is tacked on and attached to the bottom surface of the cassette body. Finally, the cassette body in which the embedding block is attached to the bottom surface is taken out of the container and turned over. As a result, an embedding block is obtained that is fixed to the bottom surface of the cassette body.

As described above, when the embedding block is produced, the embedding cassette is used as a container for performing dehydration, delipidation, and replacement treatment of the biological specimen and also used as a fixing table for the embedding block. The embedding cassette is thus used for a twofold purpose in order to prevent biological specimens from mixing with each other when a large number of biological specimens are processed at the same time. Quality control of embedding blocks is especially important to perform accurate tests and observations, and mixing of specimens requires special attention.

In order to perform such quality control accurately, it is necessary to record on the embedding cassette an identification code serving to recognize the type of biological specimen embedded in the embedding cassette. A variety of different methods can be used for such recording, but a simple method involves printing on the embedding cassette with a laser beam of a CO₂ laser or the like. However, with this method, the text is simply carved in the embedding cassette. Therefore, no coloration is performed and the text is difficult to read.

A method has been considered by which a thin layer of a resin (for example, an acrylic/maleic resin) having added thereto a colorant that creates contrast in color with the embedding cassette is coated on the printing surface of the embedding cassette and then printing is performed by cutting the resin with a laser beam (refer to Patent Document 1).
With this method, the identification code is colored and, therefore, can be readily recognized, thereby enabling reliable quality control of the embedding block.

### Related Art Document

### Citation List

Patent Document 1: US Patent No. 6,518,542

### Summary of the Invention

### Problems to be Solved by the Invention

However, a problem associated with the embedding cassette described in Patent Document 1 is that the resin can be easily peeled off.
More specifically, conventional embedding cassettes have been produced from polyoxymethylene, which is commonly named polyacetal (POM; polyacetal) in order to satisfy requirements relating to chemical resistance, dimensional stability, and stability of mechanical strength. However, the POM features very poor affinity for resins, and in most cases the coated resin is easily scratched and the resin peels off from the scratches. Therefore, this can lead to a crucial problem of making it impossible to perform accurately the quality control of embedding blocks.

Where the resin thickness is increased to improve bonding strength with the embedding cassette, the cutting depth of the laser beam has to be increased. However, in this case, the duration of laser beam irradiation is increased. As a result, the resin is melted and the text or the like melts down and becomes difficult to read. As a result a new problem is created: the printed identification code is difficult to distinguish.

With the foregoing in view, it is an object of the present invention to provide an embedding cassette having a bright and easily recognizable identification code that has a very low probability of peeling off from the embedding cassette.

### Means for Solving the Problems

The present invention provides the following means for resolving the above-described problems and achieving the above-mentioned objects.
(1) An embedding cassette in accordance with the present invention is used as a container for performing a paraffin replacement treatment of a biological specimen and also used as a loading table of an embedding block in which the biological specimen subjected to the paraffin replacement treatment is embedded in an embedding material, the embedding cassette including: a cassette body that is formed from a polyester resin and has an accommodation concave portion that accommodates the biological specimen and a flat printing surface; a thin-film layer that is formed on the printing surface from a resin having chemical resistance with respect to formic acid, formalin, ethanol, and xylene, that has a color different at least in lightness from a color of the cassette body; and an identification code that is displayed in the thin-film layer by cutting by irradiation with a laser beam.

The embedding cassette in accordance with the present invention, is used as a container for performing a paraffin replacement treatment of a biological specimen and also used as a loading table of an embedding block in which the biological specimen subjected to the paraffin replacement treatment is embedded in an embedding material. In this case, an identification code (necessary information relating to biological specimen (a product number or type of test animal, type of organ, and the like)) is displayed on a thin-film layer formed on the printing surface of the embedding cassette by cutting by irradiation with a laser beam. Therefore, quality control of the embedding block can be performed by recognizing the identification code.

In particular, because the cassette body is formed from a polyester resin, the cassette body has excellent affinity for resins, in addition to chemical resistance, dimensional stability, and stability of mechanical strength. In other words, good compatibility with resins is provided in addition to satisfying the requirements relating to the embedding cassette. Therefore, by contrast with the conventional embedding cassettes, the thin-film layer formed on the printing surface is in a state of strong adhesion to the cassette body and cannot be easily peeled off.

Moreover, because the thin-film layer is formed from a resin having chemical resistance with respect to formic acid, formalin, ethanol, and xylene, which are reagents generally used in preparation of the embedding block, the thin-film layer does not peel off from the printing surface even when immersed into these reagents during preparation of the embedding block.
As a result, the thin-film layer can be prevented from peeling off at the intermediate stage. Therefore, quality control of the embedding block can be accurately conducted and high-quality embedding cassette can be obtained. Moreover, in a case where paraffin adheres to the thin-film layer when the embedding block is produced, even when the paraffin is scraped off with a resin or wooden knife or the like, it is highly improbable that the thin-film layer will be peeled off together with the paraffin. Therefore, even in this case, the identification code can be accurately recognized.

In addition, the color of the thin-film layer differs at least in lightness from the color of the cassette body. Therefore, the identification code can be displayed with a lightness that is different from that of the thin-film layer that provides a background color. As a result, the brightness of the identification code and that of the background color can be changed and the identification code can be displayed using the difference in lightness. Therefore, contrast can be imparted and clear visibility can be ensured.

(2) The thin-film layer may be formed from any resin selected from a urethane resin, an acrylic resin and an epoxy resin.
In this case, because the thin-film layer is formed from any resin selected from a urethane resin, an acrylic resin and an epoxy resin, the thin-film layer has excellent affinity for the cassette body formed from a polyester resin.

(3) The thin-film layer may have a thickness of 1 µm to 500 µm.
In this case, the thickness of the thin-film layer is equal to or greater than 1 µm. Therefore, the printing surface is not seen through the thin-film layer. As a result, visibility of the identification code can be ensured. Furthermore, because the thickness of the thin-film layer is equal to or less than 500 µm, the thin-film layer can be cut by short-time laser beam irradiation and the identification code can be displayed. As a consequence, the thin-film layer is not melted by the laser beam. Therefore, the text hardly melts down and the identification code with a clearly displayed contour can be obtained. In this aspect, too, the visibility of the identification code can be ensured.

(4) The thin-film layer preferably may have a thickness of 5 µm to 20 µm.
In this case, the thickness of the printing surface is 5 µm to 20 µm, the above-described operation effect can be further enhanced, text melt-down is almost completely prevented, and visibility can be further improved.

(5) The printing surface may be subjected to a corona discharge surface treatment before the thin-film layer is formed.
In this case, the printing surface is subjected to a corona discharge surface treatment. Therefore, the surface is modified and wettability thereof is improved. As a result, the thin-film layer can be attached even stronger and the resistance thereof to peeling can be further improved.

(6) The cassette body is formed from polybutylene terephthalate (PBT), and the thin-film layer may be formed from an urethane resin.
In this case, the cassette body and the thin-film layer are combined to have excellent affinity. Thus, a combination of polybutylene terephthalate (PBT) and urethane resin is used. As a result, the thin-film layer can be attached even stronger to the printing surface and the resistance of the thin-film layer to peeling is further increased.

(6) The color of the thin-film layer may have a lightness lower than that of the color of the cassette body.
In this case, the color of the thin-film layer has a lightness lower than that of the color of the cassette body, that is, has a dark color close to black color. Therefore, the identification code can be displayed with a color brighter than the background color that is the dark color. As a result, a clear difference in lightness can be obtained between the background color and the identification code and visibility can be further improved.
Furthermore, because the color of the thin-film layer is darker than the color of the cassette body, even if white paraffin adheres to the identification code, the identification code assumes a brighter light color and contrast is improved. Therefore, hardly any effect is provided on visibility.

### Advantage of the Invention

With the embedding cassette in accordance with the present invention, the probability of the thin-film layer peeling off is extremely low. In addition, a clear and easily visible identification code can be displayed. Therefore, quality control of the embedding block can be accurately performed.

### Brief Description of Drawings

[FIG. 1] It is a perspective view of an embedding block produced by using the embedding cassette in accordance with the present invention.
[FIG. 2] It is a top view illustrating an embodiment of the embedding cassette in accordance with the present invention.
[FIG. 3] It is a cross-sectional view of the embedding cassette shown in FIG. 2.
[FIG. 4] It is a top view of a cassette body constituting the embedding cassette shown in FIG. 2.
[FIG. 5] It is an A-A sectional view of the cassette body shown in FIG. 4.
[FIG. 6] It is a bottom view of a lid constituting the embedding cassette shown in FIG. 2.
[FIG. 7] It is a B-B sectional view of the lid portion shown in FIG. 6.
[FIG. 8] It shows a state in which a thin-film layer of the embedding cassette is cut by irradiation with a laser beam, thereby imprinting an identification code.
[FIG. 9] It is a process diagram relating to the production of an embedding block by using the embedding cassette shown in FIG. 2; this figure shows a state in which a biological specimen is accommodated inside the embedding cassette and the embedding cassette is then accommodated inside a pallet filled with a reagent.
[FIG. 10] It shows a state after that shown in FIG. 9; in this state, the biological specimen subjected to the paraffin replacement treatment is removed from the cassette body and transferred into an embedding plate filled with liquid paraffin.
[FIG. 11] It shows a state after that shown in FIG. 10; in this state, the emptied cassette body is placed on a step of the embedding plate.
[FIG. 12] It shows a state after that shown in FIG. 11; in this state, the paraffin is solidified, an embedding block is produced, and the cassette body is then removed from the embedding plate.
[FIG. 13] It shows the results relating to a mass that are obtained in actual comparative testing of the embedding cassette in accordance with the present invention in which a thin-film layer is formed from an urethane resin on a printing surface of a cassette body composed of a polyester resin and an embedding cassette in which a thin-film layer is formed from an urethane resin on a printing surface of a cassette body composed of a polyacetal (POM) that has been conventionally used.
[FIG. 14] It shows the results relating to a storage elastic modulus that are obtained in actual comparative testing of the embedding cassette in accordance with the present invention in which a thin-film layer is formed from an urethane resin on a printing surface of a cassette body composed of a polyester resin and an embedding cassette in which a thin-film layer is formed from an urethane resin on a printing surface of a cassette body composed of a polyacetal (POM) that has been conventionally used.
[FIG. 15] It shows the results relating to a loss elastic modulus that are obtained in actual comparative testing of the embedding cassette in accordance with the present invention in which a thin-film layer is formed from an urethane resin on a printing surface of a cassette body composed of a polyester resin and an embedding cassette in which a thin-film layer is formed form an urethane resin on a printing surface of a cassette body composed of a polyacetal (POM) that has been conventionally used.

### Mode for Carrying Out the Invention

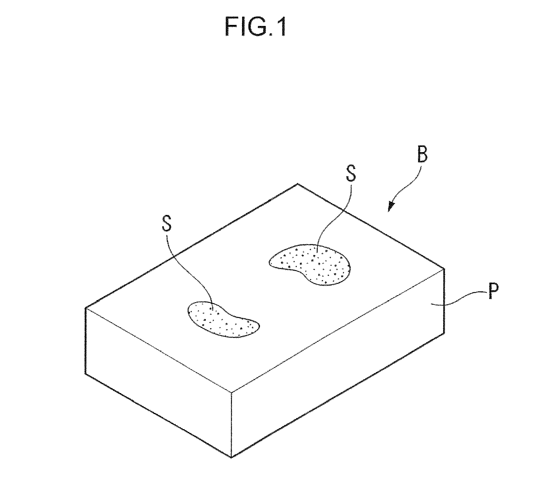

An embodiment of the embedding cassette in accordance with the present invention will be explained below with reference to FIGS. 1 to 15.
A method for inspecting and observing a biological specimen S is known by which an embedding block B shown in FIG. 1 in which the biological specimen S is embedded in paraffin P that is an embedding material is sliced into very thin sections with a thickness of 3 µm to 5 µm to prepare thin sections and thin section samples are used in which the thin sections are fixed to a substrate such as a slide glass.

An embedding cassette 1 in accordance with the present invention is used as a container for performing a paraffin replacement treatment of the biological specimen S and also used as a loading table for loading the embedding block B when the embedding block is produced. Details relating to the embedding cassette 1 and the procedure for producing the embedding block B that uses the embedding cassette 1 will be described below.
The biological specimen S is a tissue of an organ or the like that has been taken from a test animal such as a mouse. A specimen subjected to a paraffin replacement treatment after dehydration and delipidation is used.

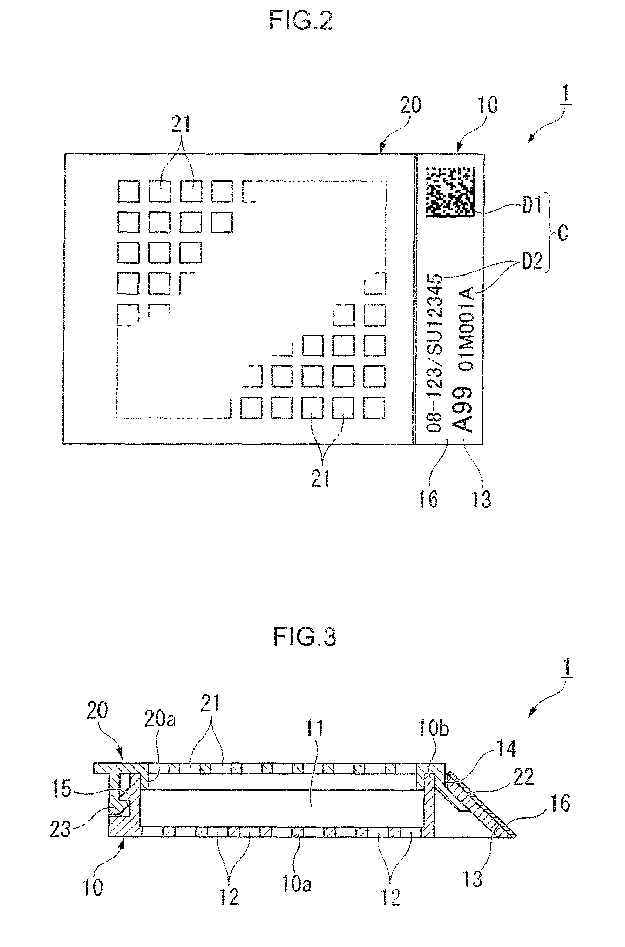

As shown in FIGS. 2 and 3, the embedding cassette 1 in accordance with the embodiment of the present invention is mainly constituted by a cassette body 10 that has an accommodation concave portion 11 that accommodates the biological specimen S and a lid 20 that is detachably fixed to the cassette body 10.
The embedding cassette 1 is formed from polybutylene terephthalate (PBT), which is a polyester resin.

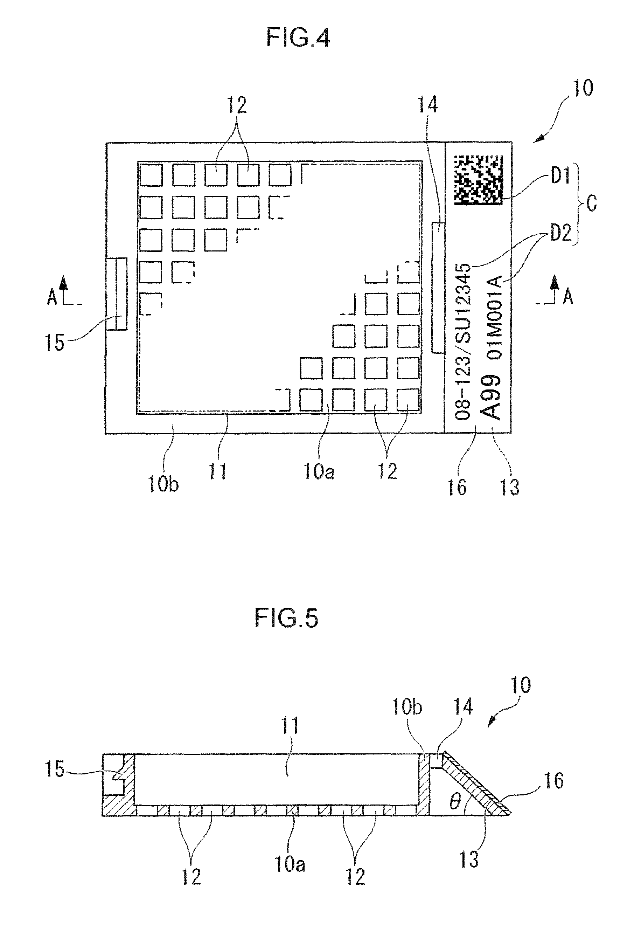

As shown in FIGS. 4 and 5, the cassette body 10 is formed in a rectangular shape (when viewed from the top), and an upper surface portion serves as an opening of the accommodation concave portion 11. A plurality of through holes 12 are formed as an array in a bottom surface 10a, and the inside and outside of the accommodation concave portion 11 are connected via the through holes 12. At one end side of the cassette body 10 of the present embodiment, a printing surface 13 that has a flat surface is formed at a predetermined angle θ with respect to the bottom surface 10a of the cassette body 10. The printing surface 13 is a surface where the below-described thin-film layer 16 will be formed.
The printing surface 13 of the present embodiment is subjected to a corona discharge surface treatment at a stage before the thin-film layer 16 is formed.

Further, in a side wall portion 10b surrounding the accommodation concave portion 11, an insertion hole 14 into which an engagement piece 22 of the below-described lid 20 is inserted is formed in a portion that is adjacent to the printing surface 13. In the side wall portion 10b, a protruding portion 15 that engages with an engagement hook 23 of the below-described lid 20 is formed on the opposite side from the insertion hole 14, so that the accommodation concave portion 11 is located therebetween.

A thin-film layer 16 formed by coating an urethane resin dissolved with an ester solvent is provided over the entire printing surface 13. In this case, the thickness of the thin-film layer 16 is adjusted so as to fit within a range of equal to or greater than 1 µm and equal to or less than 500 µm.
The thin-film layer 16 has a color that differs at least in lightness from the color of the cassette body 10. In the present embodiment, the color of the thin-film layer 16 has a lightness lower than that of the color of the cassette body 10. More specifically, the thin-film layer 16 has a black color with a lightness (V) of 1.5 according to the Munsell color system (JIS-Z8102) and the embedding cassette 1 has a white color with a lightness (V) of 9.5 according to the Munsell color system (JIS-Z8102).

An identification code C is displayed at the thin-film layer 16 by cutting with a laser beam L emitted from a laser marker device or the like (not shown in the figure).
The identification code C is constituted by text data D1 that displays information such as a test number, a group number, an animal number, a gender, and a block number and a data matrix D2 that displays the information of these types two-dimensionally with a bar code.

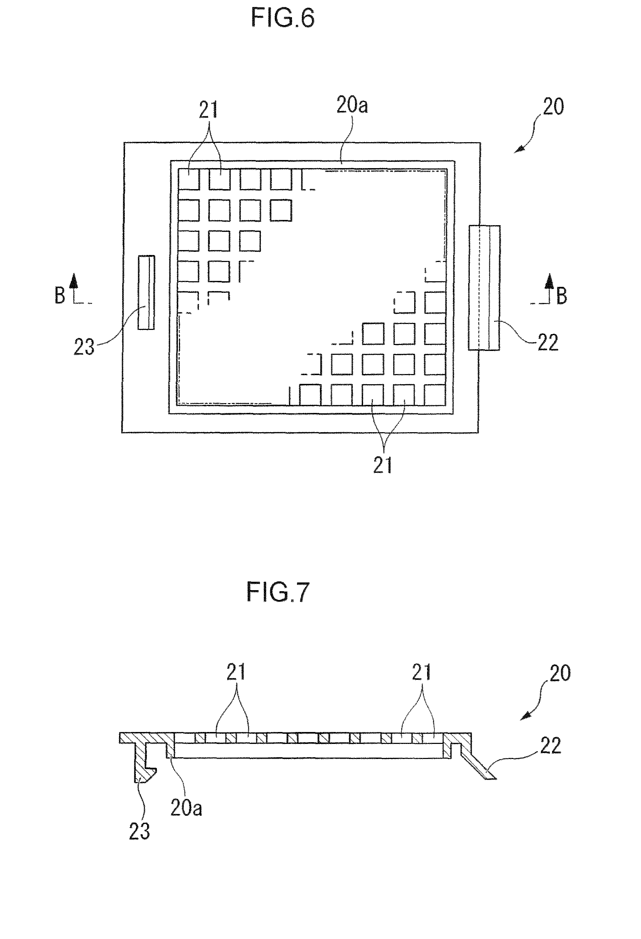

As shown in FIGS. 6 and 7, the lid 20 is a plate-shaped member formed in a rectangular shape (in the top view thereof) and is formed to a size enabling the lid to cover completely the entire side wall portion 10b of the accommodation concave portion 11 of the cassette body 10. A step portion 20a of a rectangular shape is formed at the lower surface of the lid 20. The step portion 20a is formed to a size such that the step portion can be inserted in the accommodation concave portion 11, while being in contact with the side wall portion 10b of the cassette body 10. As a result, when the lid 20 is placed on the cassette body 10, the step portion 20a fits inside the accommodation concave portion 11 and, therefore, the lid 20 is prevented from being displayed in the horizontal direction.
A plurality of through holes 21 are formed as an array, similarly to through holes in the cassette body 10, in the region surrounded by the step portion 20a. As a result, when the lid 20 is placed on the cassette body 10, the inside and outside of the accommodation concave portion 11 are linked via the through holes 21 provided in the lid 20.

Furthermore, the engagement piece 22 that is inserted into the above-described insertion hole 14 of the cassette body 10 and the engagement hook 23 that engages with the protruding portion 15 of the cassette body 10 are formed at the lower surface of the lid 20. The engagement piece 22 is formed to protrude from one end side at an angle substantially identical to the angle θ formed by the bottom surface 10a and printing surface 13 of the cassette body 10. After being inserted in the insertion hole 14, the engagement piece serves to position the lid 20 in surface contact with a rear surface side of the printing surface 13. The engagement piece 23 is formed to protrude in a direction substantially perpendicular to the lower surface of the lid 20. The distal end of the engagement hook serves as a hook that catches on and engages with the protruding portion 15.
The lid 20 is thus attached to the cassette body 10 by placing in a predetermined position with respect to the cassette body 10 with the step portion 20a and engagement piece 22 and engaging the engagement hook 23 with the protruding portion 15.

A case in which the embedding block B is produced by using the above-described embedding cassette 1 will be explained below. First, an operator prepares the formalin-fixed biological specimen S and prepares the embedding cassette 1 shown in FIGS. 2 and 3 that serves to accommodate the biological specimen S.

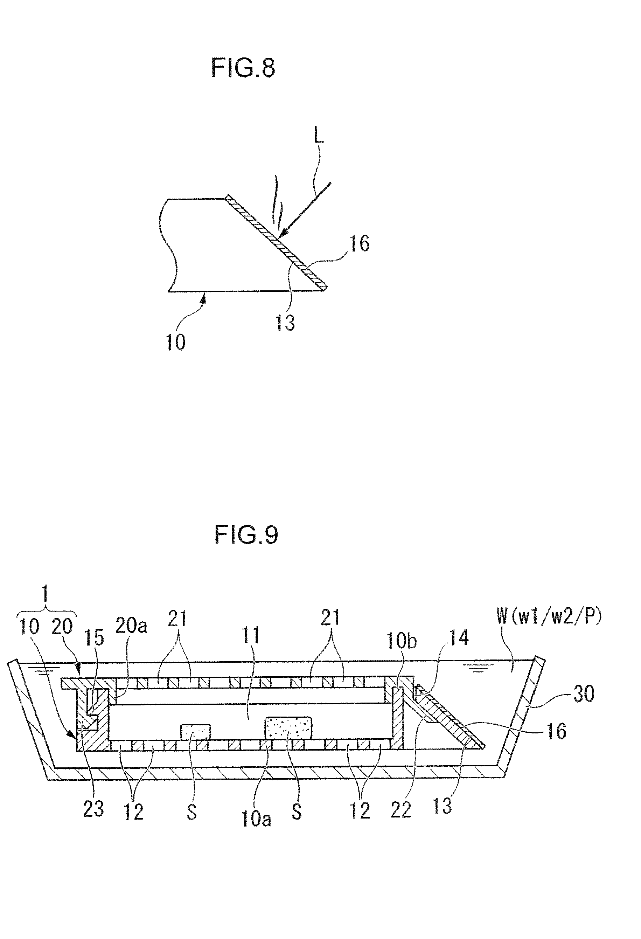

A process of preparing the embedding cassette 1 will be described below. After the cassette body 10 that is not provided with the thin-film layer 16 has been prepared, the printing surface 13 is subjected to a corona discharge surface treatment. As a result, the printing surface 13 is modified and wettability thereof is improved. An urethane resin dissolved with an ester solvent is then coated on the printing surface 13 by silk printing, and the thin-film layer 16 is formed on the printing surface 13. In this case, the thickness of the thin-film layer 16 is adjusted to fit in a range of from 1 µm to 500 µm. After drying for a predetermined time in an atmosphere at a predetermined temperature, the thin-film layer 16 is cut by irradiation with a laser beam L, as shown in FIG. 8, and the identification code C composed of text data D1 and data matrix D2 is displayed. The embedding cassette 1 shown in FIGS. 2 and 3 can thus be prepared.

The biological specimen S corresponding to the displayed identification code C is then cut to a suitable size and then accommodated in the accommodation concave portion 11 of the cassette body 10. Upon accommodation, the lid 20 is attached to the cassette body 10 and the biological specimen S is enclosed inside the cassette body. In other words, the engagement piece 22 of the lid 20 is inserted in the insertion hole 14 of the cassette body 10, and in this state the lid 20 is gradually placed on the cassette body 10. As a result, the step portion 20a of the lid 20 starts gradually penetrating from the side of the engagement piece 22 into the accommodation concave portion 11 of the cassette body 10. Because the lid 20 is thus aligned, the lid 20 can be accurately placed on the cassette body 10. Finally, the engagement hook 23 of the lid 20 is fitted on the protruding portion 15 of the cassette body 10, thereby making it possible to attach the lid 20 accurately to the cassette body 10 and close the opening of the accommodation concave portion 11.

After the biological specimen S has been enclosed, the biological specimen S is subjected to a paraffin replacement treatment. First, as shown in FIG. 9, the embedding cassette 1 is immersed in a pallet 30 filled with an alcohol w1 as a reagent W. In this case, because the inside of the accommodation concave portion 11 is linked to the outside by the through holes 12 and 21 formed in the cassette body 10 and lid 20, respectively, the alcohol w1 flows into the accommodation concave portion 11. As a result, water and lipids contained in the biological specimen S are replaced with the alcohol w1, that is, dehydration and delipidation are performed.

The reagent W located in the pallet 30 is then substituted with xylene w2. As a result, the alcohol w1 that has previously been used for replacement is replaced with xylene w2. Finally, the reagent W located in the pallet 30 is replaced with liquid paraffin P and the xylene w2 that has previously been used for replacement is replaced with the paraffin P. As a result, it is possible to produce the biological specimen S in which water and lipids are replaced with paraffin.

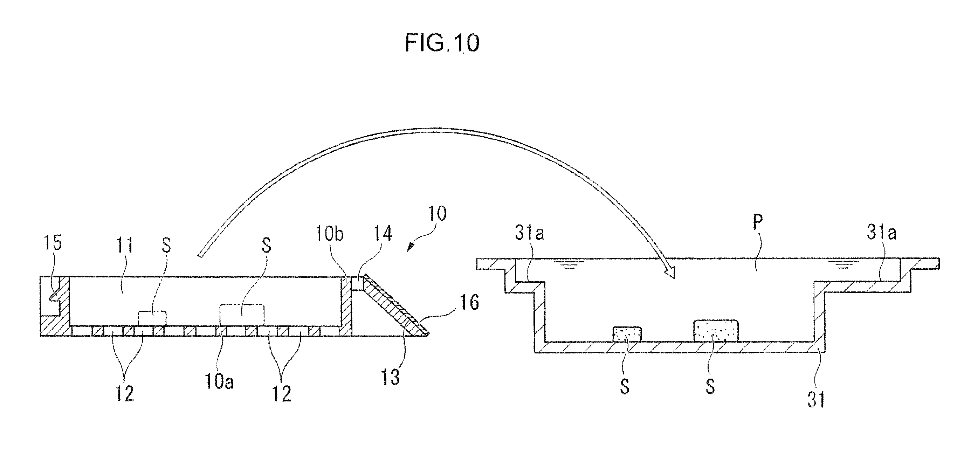

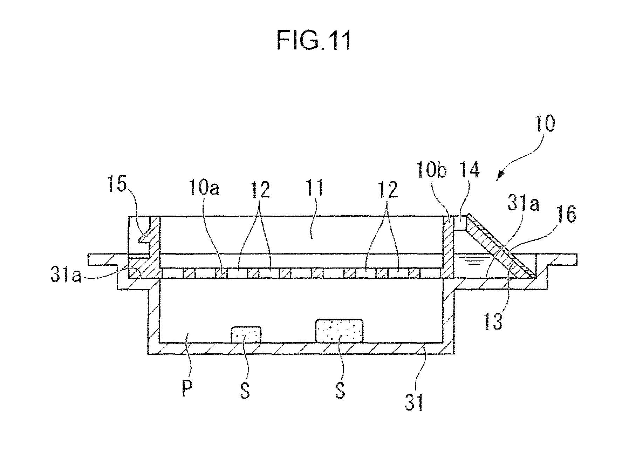

After this paraffin replacement operation has been completed, the lid 20 is removed from the cassette body 10, as shown in FIG. 10. An embedding plate 31 is then prepared that is filled with liquid paraffin P and has a step portion 31a. The biological specimen S is then removed from inside the accommodation concave portion 11 of the cassette body 10, and the removed biological specimen S is accommodated inside the embedding plate 31 and immersed in the paraffin P. At the same time, as shown in FIG. 11, the emptied cassette body 10 is placed on the step portion 31 a of the embedding plate 31 and serves as a lid of the embedding plate 31. In this case, the amount of paraffin P is adjusted so that the paraffin P enters the accommodation concave portion 11 of the cassette body 10. In this state, the embedding plate 31 is cooled and paraffin P is cooled and solidified.

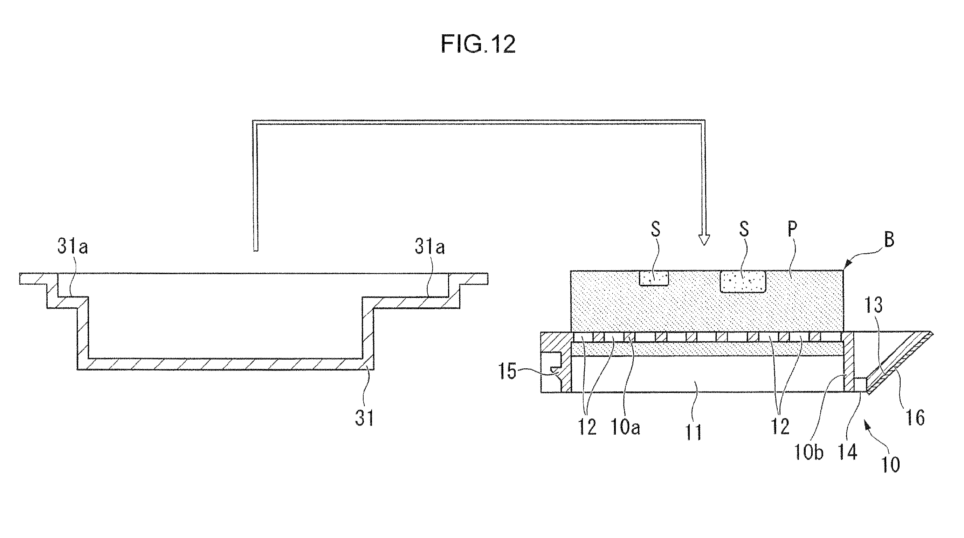

As a result, the embedding block B can be produced in which the biological specimen S is embedded. In this case, the embedding block B is tacked on and attached to the bottom surface 10a of the cassette body 10. Finally, as shown in FIG. 12, the cassette body 10 in which the embedding block B is attached to the bottom surface 10a is taken out of the embedding plate 31 and turned over. As a result, the embedding block B is obtained that is fixed to the bottom surface 10a of the cassette body 10.

As described above, when the embedding block B is produced, the embedding cassette 1 is used as a container for performing a paraffin replacement treatment of the biological specimen S and also used as a loading table of the embedding block B. The embedding cassette 1 is thus used for a twofold purpose. Therefore, even when a large number of biological specimens S are processed at the same time, the biological specimens S can be prevented from mixing with each other. Moreover, as shown in FIG. 2, because the identification code C is displayed at the thin-film layer 16 formed at the printing surface 13 in the cassette body 10, quality control can be accurately conducted.

In particular, because the cassette body 10 is formed from PBT, which is a polyester resin, the cassette body excels in chemical resistance with respect to formic acid, formalin, ethanol, and xylene and also has excellent dimensional stability and mechanical strength. In addition, the cassette body excels in affinity for resins. In other words, good compatibility with resins is provided in addition to satisfying the requirements relating to the embedding cassette 1. Therefore, by contrast with the conventional embedding cassettes, the thin-film layer 16 formed on the printing surface 13 is in a state of strong adhesion to the cassette body 10 and cannot be easily peeled off. Moreover, because the thin-film layer 16 is composed of an urethane resin dissolved in an ester solvent that does not dissolve the cassette body 10, the cassette body 10 cannot be dissolved.

As a result, the thin-film layer 16 can be prevented from peeling off at the intermediate stage. Therefore, quality control of the embedding block B can be accurately conducted and high-quality embedding cassette 1 can be obtained. Moreover, in a case where paraffin P adheres to the thin-film layer 16 when the embedding block B is produced, even when the paraffin P is scraped off with a resin or wooden knife or the like, it is highly improbable that the thin-film layer 16 will be peeled off together with the paraffin. Therefore, even in this case, the identification code C can be accurately recognized.

Furthermore, in the present embodiment, the printing surface 13 is subjected to the corona discharge surface treatment before the thin-film layer 16 is formed. Therefore, the surface is modified and wettability thereof is improved. As a result, the thin-film layer 16 can be attached even stronger and the resistance thereof to peeling can be further improved. In addition, the cassette body 10 and thin-film layer 16 are configured by a combination of resins with excellent affinity, that is, PBT and urethane resin. Therefore, the thin-film layer 16 has an especially high resistance to peeling.

Furthermore, the color of the thin-film layer 16 differs at least in lightness from the color of the cassette body 10. Therefore, the identification code C can be displayed with a lightness that is different from that of the thin-film layer 16 that provides a background color. As a result, the brightness of the identification code C and that of the background color can be changed and the identification code C can be displayed using the difference in lightness. Therefore, contrast can be imparted and clear visibility can be ensured. In particular, in the present embodiment, the cassette body 10 is white and the thin-film layer 16 is black. Therefore, the difference in lightness between the background color and the identification code C becomes clearer and excellent visibility is attained.

Furthermore, in the present embodiment, because the thin-film layer 16 has a thickness equal to or greater than 1 µm, the printing surface 13 is not seen through the thin-film layer. In this aspect, visibility of the identification code C can be also ensured. Furthermore, because the thickness of the thin-film layer 16 is equal to or less than 500 µm, the thin-film layer can be cut by short-time irradiation with laser beam L and the identification code C can be displayed. As a consequence, the thin-film layer 16 is not melted by the laser beam L. Therefore, the text hardly melts down and the identification code C with a clearly displayed contour can be obtained. In this aspect, too, the visibility of the identification code C can be ensured.

The technical scope of the present invention is not limited to the above-described embodiment, and various changes can be made without departing from the essence of the invention.

For example, in the present embodiment, the printing surface 13 is an inclined surface, but such a configuration is not limiting, and the printing surface may be not inclined and also may be in any location, provided that it is formed on the surface of the cassette body 10. However, the inclined surface is preferred from the standpoint of visibility when the embedding cassette 1 is placed on a flat surface.

Furthermore, in the present embodiment, the thin-film layer 16 is formed by silk printing the urethane resin dissolved in the ester solvent, but the formation method is not limited to silk printing, and the thin-film layer 16 may be formed by coating by other methods (for example, pad printing). In this case, a similar operation effect can be also demonstrated.
However, because silk printing makes it possible to form the thin-film layer 16 of a more uniform thickness, highly accurate finishing can be performed not only with respect to the text data D1, but also with respect to data matrix D2 that require fine printing quality. Accordingly, silk printing is preferred.

The urethane resin is dissolved in the ester solvent, but other solvents, for example, a xylene solvent, a glycol ether solvent, or an aromatic hydrocarbon solvent may be also used. These solvent also cause no dissolution of the cassette body 10.

Furthermore, in the present embodiment, the thin-film layer 16 is formed by using the urethane resin, but the thin-film layer is not restricted to the urethane resin and may be formed from a resin having chemical resistance with respect to formic acid, formalin, ethanol, and xylene, which are reagents generally used in preparation of the embedding block B. For example, thin-film layer 16 may be formed by using an acrylic resin or an epoxy resin. Also in this case, because the thin-film layer 16 does not peel off from the printing surface 13 even when immersed into these reagents during preparation of the embedding block B, a similar operation effect can be also obtained.
Moreover, in a case where the thin-film layer 16 is formed by using an epoxy resin, for example, a xylene solvent, an ethylbenzene solvent, a glycol ether solvent, or an aromatic hydrocarbon solvent may be used as a solvent.

Furthermore, in the present embodiment, a case in which PBT is used as a material of the embedding cassette 1 is explained by way of example, but other resins may be used, provided that they are polyester resins. For example, polytrimethylene terephthalate (PTT), polyethylene naphthalate (PEN), and polybutylene naphthalate (PBN). In this case, a similar operation effect can be also obtained. In this case, a similar operation effect can be also obtained.

In the present embodiment, the thickness of the thin-film layer 16 is within a range of 1 µm to 500 µm, but a range of from 5 µm to 20 µm is more preferred from the standpoint of power and irradiation time of the laser beam L. By adjusting the film thickness to this range, it is possible to prevent more effectively the printing surface 13 from being transparent and the thin-film layer 16 from sagging under the effect of irradiation with the laser beam L, thereby improving visibility.
Moreover, in a case where the thin-film layer 16 is formed by using an epoxy resin, because the adhesiveness is excellent, it is sufficient to adjust the film thickness within a range of 1 µm to 10 µm.

Furthermore, in the present embodiment, the printing surface 13 was subjected to a corona discharge surface treatment and then the thin-film layer 16 was formed. However, the corona discharge surface treatment is not essential and the thin-film layer 16 may be formed without performing the corona discharge surface treatment. It is preferable to perform the corona discharge surface treatment because it enables stronger adhesion. Moreover, in a case where a corona discharge surface treatment is not performed, it is preferable to form the thin-film layer 16 by using an epoxy resin having excellent adhesiveness.

Furthermore, in the present embodiment, the thin-film layer 16 is black and the embedding cassette 1 is white, but this color combination is not limiting. The colors may be freely selected, provided that they differ at least in lightness. For example, the thin-film layer 16 may be deep green or black and the embedding cassette 1 may be light green, light brown, light yellow, or light violet. Other color combinations may be also used. It is preferred that the lightness of the color of the thin-film layer 16 be lower than that of the color of the cassette body 10.

### (First Example)

A case will be described below in which two embedding cassettes were actually used and subjected to a variety of tests and the test results were compared. These cassettes were an embedding cassette 1 in accordance with the present invention in which a thin-film layer was formed from an urethane resin on a printing surface of a cassette body composed of a polyester resin and an embedding cassette in which a thin-film layer was formed from an urethane resin on a printing surface of a cassette body from a polyacetal (POM) that has been conventionally used in the cassette bodies.

Each embedding cassette subjected to tests will be briefly described below.
In the embedding cassette 1 in accordance with the present invention, PBT, which is a polyester resin, was selected as a material for the embedding cassette, as in the above-described embodiment. More specifically PBT with a trade name VALOX 310 (manufactured by SABIC Polymerland Japan Co., Ltd.) that had an average molecular weight of 32,500 and a 0% filler was used.
The urethane resin used (trade name SG 740(N)710 Black, manufactured by Seiko Advance Co.) included a vinyl urethane resin (22-35%), cyclohexane (17-27%), isophorone (15-25%), an ester solvent (5-11%), and carbon black (less than 5%) as components.

In the embedding cassette used for comparison, POM was selected as the embedding cassette material. The urethane resin used was identical to that described above.

In both cases, the urethane resin film was formed by the following procedure.
First, the printing surface was subjected to a corona discharge surface treatment before the urethane resin film was formed. In this case, the voltage was set to 0.57 KW, the distance between the electrode and the work was set to 2 mm, and the discharge time was set to about 10 sec.
The solvent for dissolving the urethane resin was produced by mixing a base material and a curing agent at a weight ratio of 10 : 1 and then adding isophorone and diluting.
The urethane resin was then dissolved with the prepared solvent and a thin-film layer was formed by silk printing the solution on the printing surface subjected to the corona discharge surface treatment. In this case, printing was conducted with a Nylon screen (count of yarn 270). The thickness of the thin-film layer was 10 µm, that is, within a range of 1 µm to 500 µm. The film was then formed and the absence of scratches, oozing, and sagging was visually confirmed. The film was then dried for 40 min in an atmosphere with a temperature of 80°C in a drying machine.

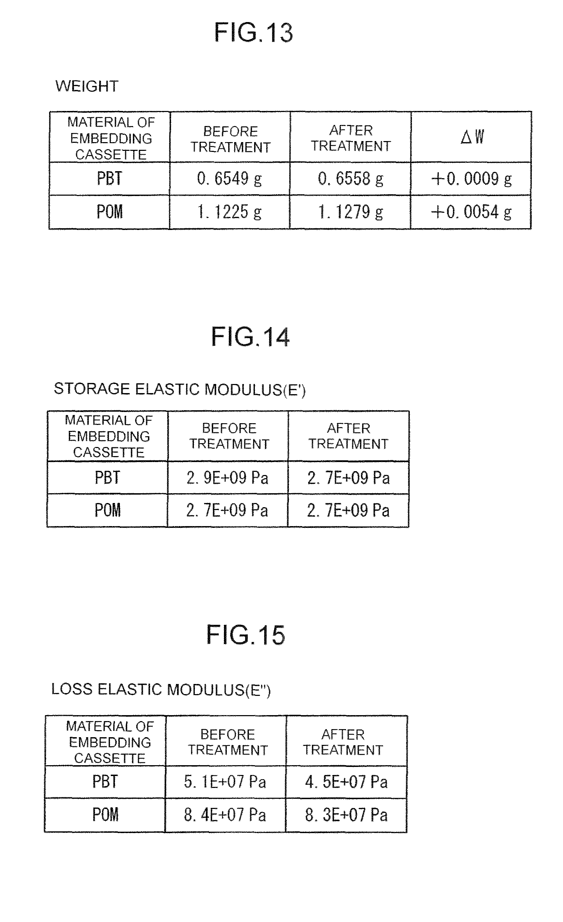

The embedding cassettes of two types that were thus produced were exposed, for a time longer than the time of the usual use, to reagents, namely, formalin, formic acid - formalin, ethanol, and xylene that were set to concentrations higher than those of the usual use, and changes in weight, storage elastic modulus, and loss elastic modulus were measured for each embedding cassette and compared. The comparison results are shown in FIGS. 13 to 15.

The time of exposure to each reagent is described below.
First, the embedding cassettes were immersed for 3 days in 20% formalin, then for 15 days in 10% formic acid - formalin, then for 2 days in 80% ethanol, then for 1 day in 100% ethanol, and finally for 10 h in xylene.

As shown in FIG. 13, the weight change from a state before the immersion into the reagent to a state after the immersion was confirmed to be less in the embedding cassette 1 in accordance with the present invention than in the comparative embedding cassette. As shown in FIG. 14, the storage elastic modulus (E'), which is an indicator of viscoelasticity, was almost the same, but as shown in FIG. 15, the loss elastic modulus (E"), which is an indicator of viscoelasticity, was confirmed to be less in the embedding cassette 1 in accordance with the present invention than in the comparative embedding cassette. In other words, when a dynamic force was applied to embedding cassettes, the embedding cassette 1 in accordance with the present invention was confirmed to have a smaller displacement and be superior to the conventional embedding cassette.

These comparison results confirmed that the cassette body of the embedding cassette in accordance with the present invention that was produced from PBT could get higher evaluation than the cassette body of the conventional embedding cassette produced from POM.
Furthermore, an operation of scraping off the paraffin P that adhered to the embedding cassette surface with a plastic knife was assumed and the embedding cassettes were exposed, for a time longer than the time of the usual use, to reagents, namely, formalin, formic acid - formalin, ethanol, and xylene that were set to concentrations higher than those of the usual use, an angular part made from an acrylic resin was brought into contact with and rubbed against the thin-film layer, and changes in the thin-film layer caused thereby were actually checked and compared.

The time of exposure to each reagent is described below.
First, the embedding cassettes were immersed for 3 days in 20% formalin, then for 3 days in 80% ethanol, then for 14 days in 10% formic acid - formalin, then for 12 h in 100% ethanol, and finally for 3 days in xylene.

The results demonstrated that in a case of the embedding cassette 1 in accordance with the present invention in which the thin-film layer 16 composed of an urethane resin was formed on the cassette body 10 composed of PBT, the thin-film layer 16 was not scraped off. By contrast, in a case of the conventional embedding cassette in which a thin-film layer composed of an urethane resin was formed on a cassette body composed of POM, almost the entire thin-film layer was scraped off.
These results actually confirmed that the cassette body 10 produced from PBT excels in affinity for resins and has a very high bonding strength to the thin-film layer 16 composed of an urethane resin.

### (Second Example)

Subsequently, as the cassette body according to the present invention, the thin-film was formed from an epoxy resin instead of the urethane resin, and the same tests as the first example were performed. The results thereof will be described below.
The epoxy resin used (trade name 1300 HC870, manufactured by Seiko Advance Co.) included a carbon black (5-10%) as a colorant. The epoxy resin film was formed by the following procedure.
Because the case of using the epoxy resin is excellent in affinity for the cassette body when compared with other materials, in particular, it is not necessary for the printing surface to be subjected to a corona discharge surface treatment. A thin-film layer was formed by silk printing the epoxy resin dissolved with a solvent on the printing surface. In this case, the thickness of the thin-film layer was 10 µm. The film was then formed and the absence of scratches, oozing, and sagging was visually confirmed. The film was then baked and dried for 30 min in an atmosphere with a temperature of 150°C in a drying machine.

Subsequently, the thus prepared embedding cassette was tested with the same methods as the first example. The results demonstrated that even in a case where the thin-film layer composed of an epoxy resin was formed on the cassette body composed of PBT, the thin-film layer was not scraped off. Accordingly, it was actually confirmed that the cassette body produced from PBT has a very high bonding strength to the thin-film layer composed of an epoxy resin as in the case of using the urethane resin.

### Reference Signs List

B embedding block
C identification code
P paraffin (embedding material)
S biological specimen
1 embedding cassette
10 cassette body
11 accommodation concave portion
13 printing surface
16 thin-film layer

## Claims

1. An embedding cassette that is used as a container for performing a paraffin replacement treatment of a biological specimen and also used as a loading table of an embedding block in which the biological specimen subjected to the paraffin replacement treatment is embedded in an embedding material, the embedding cassette comprising:
a cassette body that is formed from a polyester resin and has an accommodation concave portion that accommodates the biological specimen and a flat printing surface;
a thin-film layer that is formed on the printing surface from a resin having chemical resistance with respect to formic acid, formalin, ethanol, and xylene, that has a color different at least in lightness from a color of the cassette body; and
an identification code that is displayed in the thin-film layer by cutting by irradiation with a laser beam.

2. The embedding cassette according to claim 1, wherein the thin-film layer is formed from an urethane resin, an acrylic resin and an epoxy resin.

3. The embedding cassette according to claim 1, wherein the thin-film layer has a thickness of 1 µm to 500 µm.

4. The embedding cassette according to claim 3, wherein the thin-film layer has a thickness of 5 µm to 20 µm.

5. The embedding cassette according to claim 1, wherein the printing surface is subjected to a corona discharge surface treatment before the thin-film layer is formed.

6. The embedding cassette according to claim 1, wherein
the cassette body is formed from polybutylene terephthalate (PBT), and
the thin-film layer is formed from an urethane resin.

7. The embedding cassette according to claim 1, wherein the color of the thin-film layer has a lightness lower than that of the color of the cassette body.
